# EUROPEAN PATENT APPLICATION

(11) **EP 4 079 489 A1**
(43) Date of publication of application: **26.10.2022**
(21) Application number: 22166982.3
(22) Date of filing: 06.04.2022
(51) Int. Cl.: B29C 48/32, B29C 44/20, B29C 48/295, B29C 48/285, B29C 44/50, B29C 48/09, B29C 48/10

(54) **MOLD FOR EXTRUSION MOLDING, PLASTIC MANUFACTURING APPARATUS, AND PLASTIC MANUFACTURING METHOD**

(30) Priority: 16.04.2021 JP 2021069981
(71) Applicant: Ricoh Company, Ltd., Tokyo 143-8555 (JP)
(72) Inventor: OGAWA, Satoshi, Tokyo, 143-8555 (JP); TANAKA, Takashi, Tokyo, 143-8555 (JP)
(74) Representative: SSM Sandmair

(57) **Abstract**

A mold (1) for extrusion molding includes an extrusion port (3) and a plastic channel (2). The extrusion port (3) is configured to extrude a plastic composition containing at least one kind of plastic. The plastic channel (2) is configured to cause the supplied plastic composition to flow to the extrusion port (3). The plastic channel (2) includes a first channel (2a), a second channel (2b), and a third channel (2c). The second channel (2b) is connected to the first channel (2a) and has a channel cross-sectional area gradually decreasing downstream in a flowing direction of the plastic composition. The third channel (2c) is connected to the second channel (2b) and configured to cause the plastic composition to flow to the extrusion port (3). The third channel (2c) has a channel cross-sectional area gradually decreasing downstream in the flowing direction of the plastic composition.

## Description

### BACKGROUND OF THE INVENTION

### 1. Field of the Invention

The present invention relates to a mold for extrusion molding, a plastic manufacturing apparatus, and a plastic manufacturing method.

### 2. Description of the Related Art

One example of the conventionally known molds for extrusion molding includes an extrusion port from which a plastic composition containing at least one kind of plastic is extruded, and a plastic channel in which the supplied plastic composition flows to the extrusion port.

In Japanese Patent No. 4573505, a plastic channel includes a first channel, a second channel connected to the first channel, and a third channel connected to the second channel and letting a plastic composition flow to an extrusion port. The second channel is formed in such a way that the channel cross-sectional area gradually decreases downstream in a flowing direction of the plastic composition. The third channel is formed to make the plastic composition flow in a direction away from an extrusion center axis. In a cross-section including the extrusion center axis and parallel to the extrusion center axis, the ratio (GB)/(GA) of a gap (GB) of the extrusion port to a gap (GA) at a connection part between the second channel and the third channel is 5 to 20 and the channel cross-sectional area of the third channel increases toward the extrusion port.

However, corrugated creases may be formed in the foamed plastic.

### SUMMARY OF THE INVENTION

According to an aspect of the present invention, a mold for extrusion molding includes an extrusion port and a plastic channel. The extrusion port is configured to extrude a plastic composition containing at least one kind of plastic. The plastic channel is configured to cause the supplied plastic composition to flow to the extrusion port. The plastic channel includes a first channel, a second channel, and a third channel. The second channel is connected to the first channel and has a channel cross-sectional area gradually decreasing downstream in a flowing direction of the plastic composition. The third channel is connected to the second channel and configured to cause the plastic composition to flow to the extrusion port. The third channel has a channel cross-sectional area gradually decreasing downstream in the flowing direction of the plastic composition.

According to an aspect of the present invention, the occurrence of corrugated creases in the foamed plastic can be suppressed.

### BRIEF DESCRIPTION OF THE DRAWINGS

FIG. 1 is a schematic structure diagram of a plastic manufacturing apparatus for manufacturing foamed plastic according to one embodiment;
FIG. 2 is a schematic structure diagram of a kneading device for manufacturing masterbatch;
FIG. 3 is a schematic cross-sectional view of a conventional die;
FIG. 4 is a cross-sectional view of a die according to the embodiment, which is parallel to an extrusion center axis;
FIG. 5 is a cross-sectional view of a die according to Example 2, which is parallel to an extrusion center axis;
FIG. 6 is a cross-sectional view of a die according to Example 3, which is parallel to an extrusion center axis;
FIG. 7 is a cross-sectional view of a die according to Example 4, which is parallel to an extrusion center axis; and
FIG. 8 is a cross-sectional view of a die according to Comparative example 1, which is parallel to an extrusion center axis.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

First, a manufacturing method for a plastic foamed sheet, which is made of foamed plastic, is described. Manufacturing method for plastic foamed sheet

The manufacturing method for a plastic foamed sheet according to the present invention includes a kneading step, a foaming step, and the like, and includes other steps as necessary.

The kneading step and the foaming step may be performed simultaneously or as separate steps.

### Kneading step

The kneading step is a step of kneading plastic and, if necessary, a filler. In the kneading step, a foaming agent may be added to promote more efficient foaming. Depending on the application of molded products, cross-linking agents, antioxidants, colorants, various light absorbers, antistatic agents, and conductive materials may be kneaded additionally. The kneading step may be carried out in the presence of a compressible fluid for more efficient foaming or for more efficient kneading.

The plastic, the filler, and the mixture generated in the intermediate steps of the process for obtaining the final molded product may also be referred to as the plastic composition or masterbatch.

### Plastic

Examples of the plastic include: styrene-based homopolymers such as polystyrene and poly-p-methylstyrene; styrene-based copolymers such as styrene-maleic anhydride copolymer, styrene-acrylonitrile copolymer, styrene-butadiene copolymer, styrene-acrylonitrile-butadiene copolymer, styrene-acrylic acid copolymer, and styrene-methacrylic acid copolymer; styrene-based resin such as a mixture of polystyrene and polyphenylene oxide; and aliphatic polyester resin such as polylactic acid, polyglycol acid, poly(3-hydroxybutyrate), poly(3-hydroxybutyrate-3 -hydroxyhexanoate), poly(3 -hydroxybutyrate-3 -hydroxyvalerate), polycaprolactone, polybutylene succinate, and poly(butylene succinate-adipate).

Above all, biodegradable resin that can be biodegraded by microorganisms and aliphatic polyester resin, which is environmentally friendly low environmental load polymer materials, are preferred, and polylactic acid, which is a carbon neutral material and relatively inexpensive, is even more preferred. By containing 90 mass% or more of polylactic acid, biodegradable foamed plastics can be obtained.

### Filler

The aforementioned filler (also referred to as "foam core material" below) is added for the purpose of adjusting the foaming state (size, quantity, and arrangement of foams) of the foamed sheet, for the purpose of reducing cost, and for the purpose of improving the strength. The aforementioned filler may be an inorganic filler, an organic filler, or the like. Any of these fillers may be used alone or two or more kinds of fillers may be used in combination.

Examples of the inorganic filler include talc, kaolin, calcium carbonate, sheet silicate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber.

Examples of the organic filler include polymer existing in nature, such as starch, cellulose particles, wood flour, tofu refuse, rise husk, and bran, and modified products of these, a sorbitol compound, benzoic acid, metal salt of compounds thereof, phosphate ester metal salt, and rosin compounds.

Among these, silica, which is an inorganic nucleating agent, is preferred because of its high affinity with compressible fluids, which will be discussed below. If the filler other than silica is used as the base, a filler surface-treated with silica is preferred.

### Foaming agent

As the foaming agent, the following physical foaming agents are preferred because the plastic foamed sheet with a high expansion ratio can be obtained: hydrocarbons including low alkanes such as propane, normal butane, isobutane, normal pentane, isopentane, and hexane, ethers such as dimethyl ether, halide hydrocarbons such as methyl chloride and ethyl chloride, and compressible gases such as carbon dioxide and nitrogen.

Among these, it is preferable to use the compressible gases such as carbon dioxide and nitrogen because they have no odor, can be handled safely, and have a low environmental impact.

### Compressible fluid

For example, substances that can be used as the aforementioned compressible fluids include carbon monoxide, carbon dioxide, dinitrogen monoxide, nitrogen, methane, ethane, propane, 2,3-dimethylbutane, ethylene, and dimethyl ether. Among these, carbon dioxide is preferable because it has a critical pressure of about 7.4 MPa and a critical temperature of about 31°C, can easily create a supercritical state, and is nonflammable and easy to handle. One of these compressible fluids may be used alone, or two or more kinds of compressible fluids may be used in combination.

Since the solubility of the compressible fluid changes depending on the combination of plastic and the compressible fluid, temperature, and pressure, the amount of compressible fluid supplied needs to be adjusted accordingly.

For example, in the case of the combination of polylactic acid and carbon dioxide, the preferred value is 2 mass% or more and 30 mass% or less. If carbon dioxide is supplied by 2 mass% or more, the problem that the effect of plasticization is limited can be prevented. If carbon dioxide is supplied by 30 mass% or less, the problem that carbon dioxide and polylactic acid are phase-separated and the foamed sheet with uniform thickness cannot be obtained can be prevented.

### Kneading device

A kneading device used in the kneading step may employ either a continuous process in which the kneading step and the foaming step are carried out in succession, or a batch process. It is preferable to select a reactive process as appropriate considering the device efficiency, product characteristics, quality, etc.

As for the kneading device, single-screw extruders, multi-screw extruders, kneaders, non-screw cage type agitators, BIVOLAK manufactured by Sumitomo Heavy Industries, Ltd., N-SCR manufactured by Mitsubishi Heavy Industries, Ltd., spectacle blades or lattice blades manufactured by Hitachi, Ltd., Kenix or Sulzer SMLX-type static mixer-equipped tube type polymerization tank, and the like can be used because these devices can deal with the viscosity suitable for the kneading. In terms of the tone of color, self-cleaning polymerization equipment such as finishers, N-SCRs, and twin-screw extruders are given. Among these, the finisher and N-SCR are preferred in terms of the tone of color, the stability, and the heat resistance of the resin. In terms of the production efficiency, single-screw extruders and multi-screw extruders are preferred.

### Foaming step

In the foaming step, the foaming agent is expanded to foam the plastic composition. In the case of the compressible fluids, the expansion and foaming agent can be removed by releasing the pressure. As for the temperature during the foaming step, it is preferable to set such a temperature that the plastic composition is plasticized to the extent that it can be extruded.

As the driving force to make the plastic composition flow in the foaming step, the pressure from the aforementioned kneading device may be used, or a separate mechanical device such as a single-screw or multi-screw extruder or cylinder may be used for the foaming step.

### Other steps

Other steps are not limited to particular steps and may be steps performed usually for manufacturing plastic foamed sheets, and can be selected as appropriate according to the purpose. Examples of the steps include a step of molding into a sheet.

The molding step may be, for example, vacuum molding, pressure air molding, and press molding. In the present embodiment, cylindrical masterbatch is molded, and this masterbatch is made into a sheet by the molding step to obtain a plastic foamed sheet.

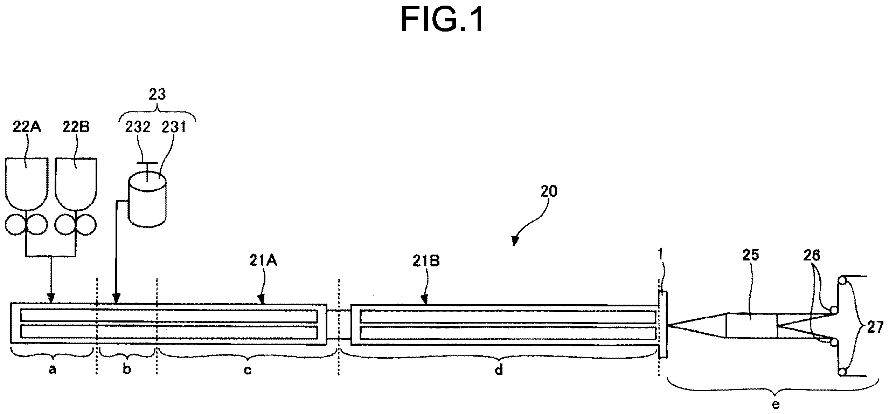

FIG. 1 is a schematic structure diagram of a plastic manufacturing apparatus for manufacturing foamed plastic according to one embodiment.

A plastic manufacturing apparatus 20 includes a first extruder 21A as a kneading device that implements the kneading step and a second extruder 21B that implements the foaming step, the extruders being connected in series.

A die 1, which is a mold for extrusion molding, is attached to an end of the second extruder 21B (downstream end in the extruding direction), and the plastic composition is extruded from the die 1 while foaming to form foamed plastic.

The first extruder 21A includes a raw material mixing and melting area (a), a compressible fluid supply area (b), and a kneading area (c), while the second extruder 21B includes an extrusion area (d).

The first extruder 21A and the second extruder 21B are twin-screw extruders (manufactured by JSW, screw diameter 42 mm, L/D = 48).

### Raw material mixing and melting area

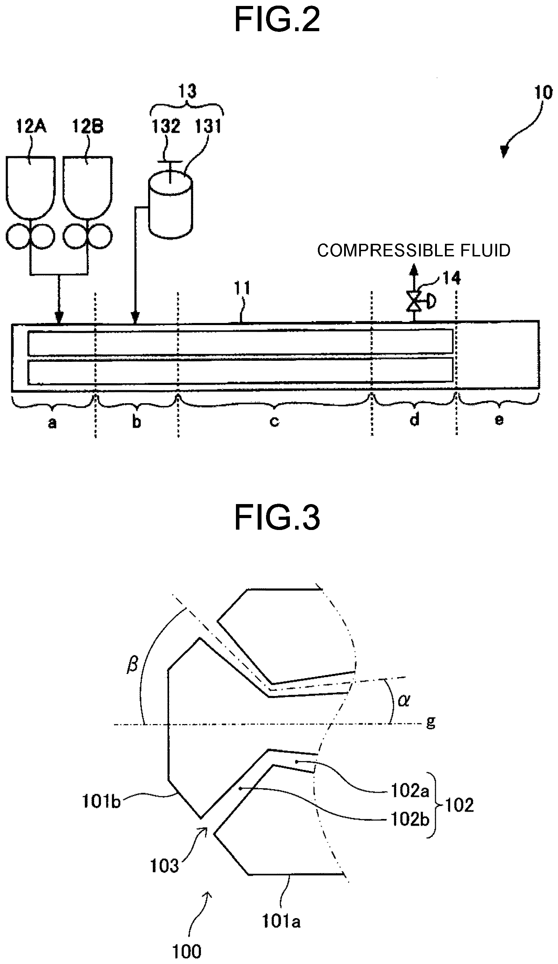

In the raw material mixing and melting area a, a filler is supplied by a first fixed quantity feeder 22A, and a resin material such as polylactic acid is supplied by a second fixed quantity feeder 22B. Instead of the filler, the masterbatch manufactured by a kneading device 10 (see FIG. 2) may be supplied from the first fixed quantity feeder 22A.

### Compressible fluid supply area

A gas introduction part 23 is connected to the compressible fluid supply area b. The gas introduction part 23 includes a gas tank 231 in which a compressible fluid containing a foaming agent is stored, and a metering pump 232 that supplies a specified amount of the compressible fluid in the gas tank 231 to the compressible fluid supply area b.

In the raw material mixing and melting area a, resin pellets are melted by heating to wet the filler. To the raw material mixture in this state, the compressible fluid containing the foaming agent is supplied by a metering pump 132 to plasticize the melted resin.

### Kneading area

The plastic composition to which the compressible fluid is supplied in the compressible fluid supply area b is extruded to the kneading area c.

In the kneading area c, the temperature is set to achieve the viscosity suitable for kneading the filler. The setting temperature depends on the specifications of the device, the resin type, the structure of the resin, the molecular weight, and so on. Therefore, although the temperature is not limited to a particular numeral, in the case of commercially available polylactic acid with a weight-average molecular weight (Mw) of about 200,000, normal kneading is performed at a set temperature that is 10°C to 20°C higher than the melting point of the polylactic acid. In contrast, kneading with the compressible fluids allows kneading at a temperature lower than the melting point of polylactic acid. By setting the temperature lower than the melting point of the resin, kneading at a relatively high viscosity becomes possible. Specifically, the setting temperature is preferably 20°C to 80°C, more preferably 30°C to 60°C lower than the melting point of the resin. For simplicity, the temperature can be set based on the current value of the stirring power of the device, for example.

By kneading the plastic composition at a temperature lower than the melting point, the kneading efficiency is increased and the foaming speed inside the die 1 can be made uniform within the plastic composition. Thus, the occurrence of partial corrugated creases in the molded foam plastic can be suppressed. Additional effects can be obtained; for example, the occurrence of degradation, carbonization, oxidation, and decomposition of burnt deposits, tar, and the like inside an extruder 11 can be suppressed.

By kneading the plastic composition at the temperature lower than the melting point, the kneading efficiency is increased and the foaming speed inside the die 1 can be made uniform within the plastic composition. Therefore, the occurrence of partial corrugated creases in the molded foam plastic can be suppressed. Additional effects can be obtained; for example, the occurrence of degradation, carbonization, oxidation, and decomposition of burnt deposits, tar, and the like inside the extruder 11 can be suppressed.

### Extrusion area

The plastic composition is kneaded in the kneading area c of the first extruder 21A and fed to the extrusion area d of the second extruder 21B. The die 1, which is a mold for extrusion molding, is attached to the end of the extrusion area d (the downstream end in the extruding direction). The plastic composition foams as it is extruded from the die 1, and thus, cylindrical foamed plastic is produced.

As for the setting temperature of the extrusion area d where the foaming step of foaming the plastic composition is performed, the temperature of the plastic composition when extruded from the die 1 is preferably set to be lower than the melting point of the plastic composition. By setting the temperature of the plastic composition when extruded from the die 1 to the temperature lower than the melting point of the plastic composition, the plastic composition can be thickened, and thus, foamed plastic with a high expansion ratio can be obtained.

### Molding processing area

A mandrel 25, which cools the tubular foamed plastic extruded from the die 1, is placed in the molding processing area e. The tubular foamed plastic extruded from the die 1 is placed along the mandrel 25 and its outer surface is cooled by air blown from an air ring to mold the tubular foamed plastic. After that, the cooled tubular foamed plastic is cut open by a cutter to form a flat sheet. After the flat sheet passes through a roller 26, the flat sheet is wound by a take-up roller 27 to obtain a foamed sheet.

Next, the manufacture of the masterbatch fed to the first extruder 21A by the first fixed quantity feeder 22A is described.

FIG. 2 is a schematic structure diagram of the kneading device 10 for manufacturing the masterbatch.

The kneading device 10 is a twin-screw extruder (manufactured by JSW, screw diameter 42 mm, L/D = 48). Similar to the plastic manufacturing apparatus 20 illustrated in FIG. 1, the kneading device 10 includes the raw material mixing and melting area (a), the compressible fluid supply area (b), the kneading area (c), the extrusion area (d), and the molding processing area (e).

In the raw material mixing and melting area a, the filler is supplied by a first fixed quantity feeder 12A, and the resin material such as polylactic acid is supplied by a second fixed quantity feeder 12B. Then, in the compressible fluid supply area b, a specified amount of compressible fluid is supplied from a gas introduction part 13. Then, the material is kneaded in the kneading area c, and then extruded to the extrusion area d.

The extrusion area d includes a pressure valve 14. After the pressure valve 14 is opened and the compressible fluid of the plastic composition is discharged to the outside, the plastic composition is extruded into a strand shape. The extruded plastic composition in the strand shape is cooled and then pelletized with a cutter in the molding processing area e to produce the masterbatch in the form of pellets.

The foamed plastic with the higher expansion ratio is more cost effective. From the viewpoint of cost, the expansion ratio of the foamed plastic is preferably 5 times or more, more preferably 10 times or more, much more preferably 20 times or more, even more preferably 30 times or more, and particularly preferably 40 times or more. Note that the foamed plastic with an expansion ratio of 45 times or more is inferior as a general foamed plastic member because of low strength, and the application of such a foamed plastic member is limited to the use for packaging materials and the like.

However, the high expansion ratio increases the risk of generating corrugated creases in the foamed plastic. In the application for the packaging materials, corrugated creases may be acceptable from an aesthetic point of view; however, the corrugated creases are better absent in order to avoid the deterioration of stackability.

When the molded foamed plastic sheet is subjected to the secondary molding, such as disposable containers and blister packs, the expansion ratio is preferably from 1 to 30 times, more preferably from 1 to 10 times, and even more preferably from 1 to 3 times. In this application, the expansion ratio is low; however, the generation of corrugated creases degrades the appearance and the corrugated creases may trigger the strength decrease, which results in the failure in the secondary molding. Therefore, corrugated creases are not acceptable in this application.

The desired expansion ratio can be obtained by controlling one or more of the following factors in combination: kneading temperature, residence time, ambient temperature, foaming agent concentration, foaming agent type, foaming agent uniformity, plastic molecular weight distribution, and discharge speed from the die 1.

It is known that corrugated creases are related to the expansion ratio, and as the expansion ratio is higher, the more corrugated creases occur. However, as described above, the optimum expansion ratio depends on the application of the molded foamed plastic, and decreasing the expansion ratio to suppress the corrugated creases has limitation.

FIG. 3 is a schematic cross-sectional view of a conventional die 100.

As illustrated in FIG. 3, the conventional die 100 includes an outer die 101a including a through-hole that runs in the extruding direction of the plastic composition (from the right to the left in the drawing) and an inner die 101b disposed within the through-hole of the outer die 101a.

By an inner peripheral surface of the through-hole of the outer die 101a and an outer peripheral surface of the inner die 101b, a plastic channel 102 having a cross-sectional shape orthogonal to an extrusion center axis g being annular is formed. The plastic channel 102, which is a gap between the inner die 101b and the outer die 101a, has an upstream channel 102a and a downstream channel 102b.

The channel cross-sectional area (cross-section perpendicular to the flowing direction of the plastic composition in the channel) of the upstream channel 102a decreases downstream in the flowing direction of the plastic composition in the channel.

The downstream channel 102b is configured to have a diameter gradually increasing downstream in the flowing direction of the plastic composition in the channel. The downstream channel 102b is configured so that the channel cross-sectional area gradually increases downstream in the flowing direction of the plastic composition.

Obtaining a foamed plastic sheet with the high expansion ratio using this conventional die 100 results in the corrugated creases. The applicant's intensive research has clarified that the pressure applied to the plastic composition in the downstream channel 102b became less than or equal to the pressure at which the plastic composition starts foaming, and the foaming of the plastic composition started in the downstream channel 102b. When the plastic composition foams in the narrow downstream channel 102b and the volume of the plastic composition increases, the generated foams cannot go anywhere. As a result, it is thought that the plastic composition foams upstream and downstream of the plastic composition in search of an escape site, resulting in these corrugated creases.

In view of this, in the present embodiment, the shape of the plastic channel in which the plastic composition flows is devised in order to optimize the pressure applied to the plastic composition in the plastic channel. Thus, the foamed plastic sheet with a higher expansion ratio and fewer corrugated creases is obtained. Specific description is hereinafter made with reference to the drawings.

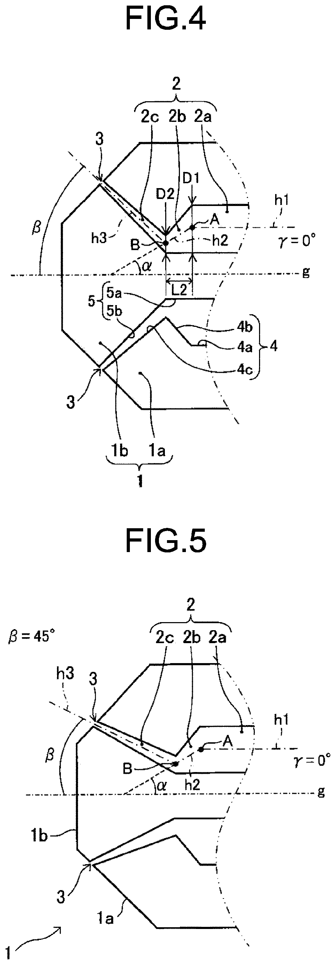

FIG. 4 is a cross-sectional view of the die according to the present embodiment, which is parallel to the extrusion center axis.

FIG. 4 is the cross-sectional view including the extrusion center axis g of the die 1, which is parallel to the extrusion center axis g.

The extrusion center axis g described above is the center line of a plastic channel 111 with a ring shape where the dimensional center of an inner die 1b overlaps with the dimensional center of an outer die 1a. When the dimensional center line of the inner die 1b is not coincident with the dimensional center line of the outer die 1a, the straight line containing the center of gravity of the plastic fluid flowing in the ring-shaped plastic channel 111 is used as the extrusion center axis g. Although the die produces the cylindrical tubular molded product in the present embodiment, the above description similarly applies to the die 1 that produces a rectangular tubular molded product.

The die 1 includes the outer die 1a including a through-hole 101 that runs in the extruding direction of the plastic composition (from the right to the left in the drawing) and the inner die 1b disposed within the through-hole 101 of the outer die 1a.

The outer die 1a and the inner die 1b can be made of S45C, S50C, SS400, SCM440, SUS316, SUS304, and their equivalent materials. Various types of plating such as hard chromium plating may be applied for the purpose of improving the durability, or C2810, A5052, alumina, etc. may be selected for the purpose of improving the thermal conductivity. Quartz glass or other materials may be used for analytical purposes, or a mirror-polishing finishing may be used for the purpose of improving the mold release property. Blast-finishing or coating with a mold release agent may be performed. Furthermore, a mold with a variable mold structure can be used.

The through-hole 101 of the outer die 1a is perfect circular and includes a first inner peripheral surface 4a with a constant inner diameter from upstream in the extruding direction, a second inner peripheral surface 4b with an inner diameter decreasing downstream in the extruding direction, and a third inner peripheral surface 4c with an inner diameter increasing downstream in the extruding direction.

An outer peripheral surface 5 of the inner die 1b at each position in the extruding direction is a perfect circle and includes a first outer peripheral surface 5a with the diameter constant from upstream in the extruding direction and a second outer peripheral surface 5b with the outer diameter increasing downstream in the extruding direction.

An inner peripheral surface 4 of the through-hole of the outer die 1a serves as an external inner wall surface of a plastic channel 2 in which the plastic composition flows. The outer peripheral surface of a part of the inner die 1b that is placed in the through-hole serves as an internal inner wall surface of the plastic channel 2.

The plastic channel 2, which is the gap between the inner die 1b and the outer die 1a, has a first channel 2a, a second channel 2b, and a third channel 2c. The first channel 2a has a constant channel cross-sectional area. The second channel 2b is connected to the first channel 2a, and the channel cross-sectional area thereof decreases downstream in the flowing direction of the plastic composition. The third channel 2c is connected to the second channel 2b, and the downstream end in the flowing direction of the plastic composition is a ring-shaped extrusion port 3 from which the plastic composition is extruded.

The third channel 2c is configured so that the channel cross-sectional area thereof gradually decreases downstream in the flowing direction of the plastic composition. By the structure in which the channel cross-sectional area gradually decreases downstream in the flowing direction of the plastic composition, the upstream pressure of the third channel 2c in the plastic flowing direction is high and the pressure decreases downstream by the pressure loss, and at the extrusion port 3, the pressure becomes the lowest.

As a result, when the pressure of the plastic composition at the extrusion port 3 is adjusted to a predetermined pressure (for example, 7 MPa), the pressure applied to the plastic composition in the third channel 2c can be made 7 MPa or more, and the foaming of the plastic composition in the third channel 2c can be suppressed. Thus, the generation of the corrugated creases can be suppressed.

In order to obtain foamed plastic with the high expansion ratio, the plastic composition is supplied from the extruder under high pressure (for example, 30 MPa). The plastic composition, which is subjected to this high pressure (for example, 30 MPa), needs to be depressurized to a predetermined pressure (for example, about 7 Ma) at the extrusion port 3. In view of this, it is necessary to reduce the pressure of the plastic composition extruded from the extrusion port 3 to a predetermined pressure by causing the pressure loss in the plastic channel 2.

The pressure loss of the plastic composition preferably occurs on the downstream side of the plastic channel, if possible. This is because causing the pressure loss of the plastic composition on the downstream side of the plastic channel makes it easier to control the pressure of the plastic composition at the extrusion port 3 to a predetermined pressure.

Therefore, in the die 1 according to the present embodiment, the first channel 2a has a wide channel cross-sectional area, and at the same time, the plastic composition flows parallel to the extrusion center axis g in the first channel 2a to suppress the pressure loss in the first channel 2a.

If the flow of the plastic composition is obstructed at the third channel 2c connected to the extrusion port 3, causing a large pressure loss, the flow of the plastic composition may be disrupted at the third channel 2c. As a result, the plastic composition cannot be smoothly extruded from the extrusion port 3, and the corrugated creases may occur.

Therefore, the third channel 2c is designed to have the gradually narrowing channel cross-sectional area so that the plastic composition does not stagnate in the third channel 2c, while the pressure applied to the plastic composition is gradually lost. Thus, by preventing the plastic composition from stagnating in the third channel 2c, the flow of the plastic composition in the third channel 2c can be prevented from being disturbed, and the plastic composition can be smoothly extruded from the extrusion port 3. Thus, the generation of the corrugated creases can be suppressed suitably.

The channel cross-sectional area of the third channel 2c is the cross-section orthogonal to the flowing direction of the plastic composition in the third channel 2c (a channel center line h3 of the third channel 2c). The third channel 2c has a ring shape and, in the cross-section in FIG. 4, is separated from the extrusion center axis g as going downstream in the flowing direction of the plastic composition. Therefore, the channel cross-sectional area of the third channel 2c is a three-dimensional plane with a part of the surface of the cone cut off. The channel cross-sectional area can be obtained by analytical calculation. If the analytical calculations are difficult, such as when using a hollow die that is not a perfect circle, the cross-sectional area may be determined by actual measurement using a method such as 3D CAD

However, just the pressure loss in the third channel 2c described above is not enough to reduce the pressure of the plastic composition supplied at high pressure from the extruder to the predetermined pressure (about 7 MPa) before the extrusion port 3. For this reason, the second channel 2b has a large ratio (D1/D2) of a channel cross-sectional area D1 at a connection part A with the first channel 2a (inlet of the second channel 2b) to a channel cross-sectional area D2 at a connection part B with the third channel 2c (outlet of the second channel 2b). By increasing the ratio (D1/D2), the pressure loss of the plastic composition can be increased in this second channel 2b. Thus, the pressure of the plastic composition extruded from the extrusion port 3 can be reduced to a predetermined pressure (for example, about 7 MPa) and a foamed plastic sheet with a high expansion ratio can be obtained.

The ratio (D1/D2) of the channel cross-sectional area D1 at the connection part A (inlet of the second channel) to the channel cross-sectional area D2 at the connection part B (outlet of the second channel) with the third channel 2c is preferably 3 or more, that is, the channel cross-sectional area D1 is preferably 3 times or more as large as the channel cross-sectional area D2. By making this ratio 3 times or more, the pressure loss of the plastic composition can be caused suitably in the second channel 2b, and the pressure of the plastic composition extruded from the extrusion port 3 can be reduced to the predetermined pressure. Thus, the foamed plastic sheet with the high expansion ratio can be obtained.

The connection part A between the first channel 2a and the second channel 2b is the intersection point where a channel center line h1 of the first channel 2a and a channel center line h2 of the second channel 2b intersect. The connection part B between the second channel 2b and the third channel 2c is the intersection point where the channel center line h2 of the second channel 2b and the channel center line h3 of the third channel 2c intersect.

The channel cross-sectional area D1 at the connection part A (inlet of the second channel) is the cross-section orthogonal to the extrusion center axis g including the intersection point where the channel center line h1 of the first channel 2a and the channel center line h2 of the second channel 2b intersect. The channel cross-sectional area D2 at the connection part B (outlet of the second channel) is the cross-section orthogonal to the extrusion center axis g including the intersection point where the channel center line h2 of the second channel 2b and the channel center line h3 of the third channel 2c intersect.

In the cross-section illustrated in FIG. 4, the angle α between the channel center line h2 of the second channel 2b and the extrusion center axis g is preferably 10° or more and 45° or less, more preferably 15° or more and 40° or less, and even more preferably 20° or more and 35° or less. If the angle α is less than 10°, the pressure loss of the plastic composition in this second channel 2b may be insufficient, and the pressure of the plastic composition may not be reduced to the pressure at which the plastic composition foams before the plastic composition reaches the extrusion port 3. On the other hand, if the angle α exceeds 45°, the flowing direction of the plastic composition is largely changed at the connection part B with the third channel in which the plastic composition flows in the direction away from the extrusion center axis g, as illustrated in FIG. 4. As a result, the flow of the plastic composition may be disturbed on the upstream side in the third channel 2c at the outlet of the connection part B. Accordingly, the plastic composition cannot be smoothly extruded from the extrusion port 3, which may cause the corrugated creases. In addition, there is a risk of foaming of the plastic composition within the channel due to large pressure loss caused by disturbance in the flow of the plastic composition.

By setting the angle α between the channel center line h2 of the second channel 2b and the extrusion center axis g to be 10° or more and 45° or less, the disturbance of the flow of the plastic composition in the third channel 2c can be suppressed and the plastic composition at the extrusion port 3 can be reduced to a specified pressure. Thus, the generation of corrugated creases can be suppressed and the foamed plastic sheet with the high expansion ratio can be obtained.

The length of the second channel 2b in the direction of the extrusion center axis is preferably 10 mm or more. If the length is less than 10 mm, the angle between the extrusion center axis g and the second inner peripheral surface 4b, which constitutes the external inner wall surface of the second channel 2b on the inner peripheral surface of the outer die 1a, becomes too large. Therefore, the plastic composition flowing outside in the first channel, after flowing parallel to the extrusion center axis g, rapidly changes its direction by this second inner peripheral surface 4b so as to flow in the direction toward the extrusion center axis g. Accordingly, the flow of the plastic composition is disturbed in the second channel 2b. If the flow is disturbed in the channel in this manner, a large pressure loss occurs at the point where the flow is disturbed, which may cause the plastic composition to foam within the channel. If the flow is disturbed, for example, vortices appear and disappear, and the pressure of the plastic composition in the channel becomes unstable.

On the other hand, the length of the second channel 2b in the direction of the extrusion center axis is 10 mm or more, and because of this, the inclination of the second inner peripheral surface 4b is gentle. Moreover, the disturbance of the flow of the plastic composition in the second channel 2b can be suppressed and the pressure of the plastic composition in the channel can be controlled suitably.

In the present embodiment, as illustrated in FIG. 4, the internal inner wall surface of the first channel 2a and the first outer peripheral surface 5a of the inner die 1b, which constitutes the internal inner wall surface of the second channel 2b, are parallel to the extrusion center axis g. Accordingly, the plastic composition flowing inside the first channel 2a flows directly in the second channel 2b parallel to the extrusion center axis g without changing the flowing direction. Thus, the disturbance of the flow of the plastic composition in the second channel 2b can be suppressed, and the pressure of the plastic composition in the channel can be controlled suitably.

The diameter of the first outer peripheral surface 5a of the inner die 1b is preferably 20 mm or less. If the plastic channel 2 similar to that in FIG. 4 is formed with the diameter of the first outer peripheral surface 5a exceeding 20 mm, the die will become larger. By setting the diameter of the first outer peripheral surface 5a of the inner die 1b to 20 mm or less, the enlargement of the die 1 can be suppressed and the channel cross-sectional area of the first channel 2a can be enlarged, which can successfully suppress the pressure loss of the plastic composition in the first channel 2a.

In the cross-section illustrated in FIG. 4, the angle β between the extruding direction of the plastic composition extruded from the extrusion port 3 (the channel center line h3 of the third channel 2c) and the extrusion center axis g is preferably 50° or more and 90° or less. If the angle β is less than 50°, the pressure loss of the plastic composition when the plastic composition flows from the second channel 2b to the third channel 2c may be insufficient, and the pressure of the plastic composition at the extrusion port 3 may not be able to be reduced to the predetermined pressure. As a result, the foamed plastic sheet with the high expansion ratio may not be obtained.

If the angle β is 90° or less, the flowing direction of the plastic composition is largely changed at the connection part B. As a result, the flow of the plastic composition may be disturbed on the upstream side in the third channel 2c at the outlet of the connection part B. Accordingly, the plastic composition cannot be smoothly extruded from the extrusion port 3, which may cause the corrugated creases. In addition, there is a risk of foaming of the plastic composition within the channel due to large pressure loss caused by disturbance in the flow of the plastic composition.

By setting the angle β to 50° or more and 90° or less, the disturbance of the flow of the plastic composition in the third channel 2c can be suppressed and the pressure of the plastic composition at the extrusion port 3 can be reduced to the predetermined pressure. Thus, the generation of corrugated creases can be suppressed and the foamed plastic sheet with the high expansion ratio can be obtained.

In the example illustrated in FIG. 4, the first channel 2a is parallel to the extrusion center axis g (the angle γ = 0° between the channel center line h1 of the first channel 2a and the extrusion center axis), but the first channel 2a may be inclined somewhat to the extrusion center axis g. If the angle γ between the channel center line h1 of the first channel 2a and the extrusion center axis is -10° or more and 30° or less, the plastic composition can flow smoothly from the first channel 2a to the second channel 2b. Thus, the pressure loss at the connection part A between the first channel and the second channel can be suppressed. The more preferable angle γ is -10° or more and 20° or less, and the much more preferable angle γ is -10° or more and 10° or less.

As for the above angle γ, the angle between the channel center line of the first channel 2a and the extrusion center axis g at the inclination where the downstream side of the first channel 2a in the extruding direction is located closer to the extrusion center axis g than the upstream side thereof is positive. On the other hand, the angle between the channel center line of the first channel 2a and the extrusion center axis g at the inclination where the upstream side of the first channel 2a in the extruding direction is located closer to the extrusion center axis g than the downstream side thereof is negative.

Next, the evaluation tests conducted by the applicant will be described.

First, the preparation of the plastic foamed sheet used for evaluation is described.

### Preparation of plastic foamed sheet

The plastic foamed sheet was prepared using the plastic manufacturing apparatus 20 illustrated in FIG. 1. As the first extruder 21A and the second extruder 21B in the plastic manufacturing apparatus 20, twin-screw extruders (manufactured by JSW, screw diameter 42 mm, L/D = 48) were used. Dies of Examples 1 to 3 and Comparative example 1, which are described below, were attached to the downstream end of the second extruder 21B in the extruding direction to produce sheet-like foamed plastic, and the presence or absence of the corrugated creases was evaluated. The dies of Examples 1 to 3 and Comparative example 1 had an outer diameter of 70 mm and were made of SCM440 plated with chromium.

A filler masterbatch containing 3 mass% of a filler was prepared using the kneading device 10 illustrated in FIG. 2. This masterbatch was set to the first fixed quantity feeder 22A of the plastic manufacturing apparatus 20 illustrated in FIG. 1. The masterbatch is fed from the first fixed quantity feeder 22A to the raw material mixing and melting area a of the first extruder 21A at 1.67 kg/hr per unit time. In addition, polylactic acid resin (Revode 110, manufactured by HISUN, melting point 160°C) is supplied from the second fixed quantity feeder 22B to the raw material mixing and melting area a at 8.33 kg/hr per unit time. Thus, the plastic composition containing 90 mass% or more of polylactic acid was obtained.

In the compressible fluid supply area b, carbon dioxide was supplied as the compressible fluid. The expansion ratio was adjusted by varying the amount of compressible fluid supplied.

The plastic composition supplied with the compressible fluid was kneaded in the kneading area c of the first extruder 21A and fed to the extrusion area d of the second extruder 21B. The compressible fluid was removed from the kneaded plastic composition in the extrusion area d at an extrusion channel part 111b of the die 1; thus, the extruded foam was obtained. The discharge rate of the plastic composition from the die 1 was set at 10 kg/h, and the temperature of the plastic composition extruded from the die 1 was set at 150°C.

The temperature of the raw material mixing and melting area a and the compressible fluid supply area b in the first extruder 21A was set to 190°. The temperature of the kneading area c in the first extruder 21A was set to 150°C, which was 10°C lower than the melting point temperature of polylactic acid (160°C). The temperature of the extrusion area d of the second extruder 21B was set so that the temperature of the plastic composition extruded from the die 1 became about 150°C or less. The pressure from the compressible fluid supply area b to the kneading area c and the extrusion area d of the second extruder 21B (more precisely, a supply channel part 111a of the die 1) was set to 7.0 MPa or more.

### Evaluation method for foams

### expansion ratio

The expansion ratio of the foamed plastic can be obtained by dividing the density of the composition that makes up the foamed plastic (true density p0) by the bulk density (ρ1), as expressed in the following equation (^{∗}). Expansion ratio = true density (p0)/bulk density (ρ1) ... (^{∗})

The true density here is the density of the plastic composition that remains as the final plastic composition, which can be the literature values or can be measured by actual measurements of non-foamed compound pellets. In the case of polylactic acid, the true density is roughly 1.25 g/cm³.

The bulk density is obtained by measurement. The measurement method for the bulk density is not limited to a particular method and any bulk density measurement method can be employed as appropriate. For example, the following method can be used to measure the bulk density. The external dimension of the foamed sheet that has been left in an environment with a temperature of 23°C and a relative humidity of 50% for 24 hours or more is measured and the bulk volume thereof is obtained. Then, the weight of this foamed sheet is measured. The bulk density of the foamed sheet is obtained by dividing the weight of the foamed sheet by the bulk volume.

### Evaluation of corrugated creases

For evaluation of the corrugated creases, the presence or absence of the corrugated creases was checked by visual observation of the surface and the cross-section. The evaluation item covers the range of the expansion ratio at which the corrugated creases occur when the expansion ratio was varied by the aforementioned arbitrary method.

### Example 1

A die in Example 1 is the die 1 illustrated in FIG. 4, in which the channel cross-sectional area of the first channel 2a is constant and the channel cross-sectional areas of the second channel 2b and the third channel 2c decrease downstream in the flowing direction of the plastic composition. The angle β is 60°, the angle α is 30°, and the angle γ is 0°.

The die according to Example 1 was attached to the end of the second extruder 21B, and the amount of compressible fluid supplied was intentionally varied to obtain foams with an expansion ratio of 1 to 50 times.

As a result, suitable foams with an expansion ratio of 1 to 50 times free of corrugated creases were obtained. In addition, there was no breakage or transparency in the corrugated part.

### Example 2

FIG. 5 is a cross-sectional view of the die 1 according to Example 2, which is parallel to the extrusion center axis g.

The die according to Example 2 has the same configuration as the die in Example 1, except that the angle β is set to 45° as illustrated in FIG. 5. The die according to Example 2 was attached to the end of the second extruder 21B, and foam was obtained in the manner similar to Example 1.

As a result, corrugated creases were not observed in the foams with an expansion ratio of 1 to 30 times, but corrugated creases were observed in the foams with an expansion ratio of 30 to 50 times, and tears and transparency occurred in some sheets with an expansion ratio of 40 times or higher.

### Example 3

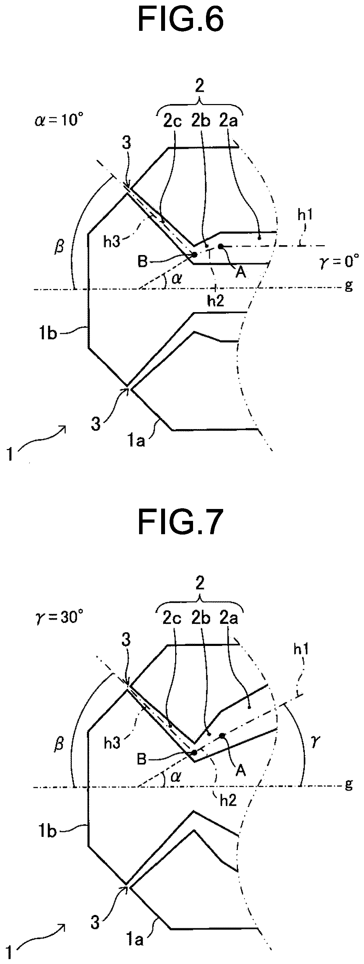

FIG. 6 is a cross-sectional view of the die 1 according to Example 3, which is parallel to the extrusion center axis g.

The die 1 according to Example 3 has the same configuration as the die of Example 1, except that the angle α is set to 10°. The die according to Example 3 was attached to the end of the second extruder 21B, and foam was obtained in the manner similar to Example 1.

As a result, corrugated creases were not observed in the foams with an expansion ratio of 1 to 30 times, but corrugated creases were observed in the foams with an expansion ratio of 30 to 50 times, and tears and transparency occurred in some sheets with an expansion ratio of 40 times or higher.

### Example 4

FIG. 7 is a cross-sectional view of the die 1 according to Example 4, which is parallel to the extrusion center axis g.

The die 1 according to Example 4 has the same configuration as the die of Example 1, except that the angle γ is set to 30°. The die according to Example 4 was attached to the end of the second extruder 21B, and foam was obtained in the manner similar to Example 1.

As a result, corrugated creases were not observed in the foams with an expansion ratio of 1 to 30 times, but corrugated creases were observed in the foams with an expansion ratio of 30 to 50 times, and tears and transparency occurred in some sheets with an expansion ratio of 40 times or higher.

### Comparative example 1

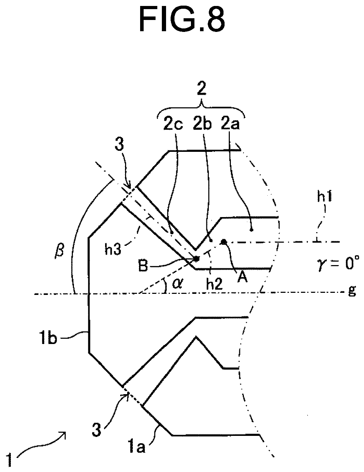

FIG. 8 is a cross-sectional view of the die 1 according to Comparative example 1, which is parallel to the extrusion center axis g.

The die according to Comparative example 1 has the same configuration as the die of Example 1, except that the third channel 2c has a configuration in which the channel cross-sectional area gradually increases downstream in the flowing direction of the plastic composition as illustrated in FIG. 8. The die according to Comparative example 1 was attached to the end of the second extruder 21B, and foam was obtained in the manner similar to Example 1.

As a result, corrugated creases were observed in the foams with an expansion ratio of 1.5 to 50 times. In particular, periodic rippling in the direction orthogonal to the extruding direction was remarkable, and the foam was not usable for practical purposes. Above all, corrugated creases at a high expansion ratio of 5 times or more caused not just thickness deviations, but also transparency of the foam and rupture because of the corrugations as defects.

Comparative example 1 has a configuration in which the third channel 2c has a cross-sectional area gradually increasing downstream in the flowing direction of the plastic composition. It is thought that, accordingly, the plastic composition foamed in the third channel 2c. In the case of the high expansion ratio, the increase in volume is large, and if foaming occurs in the narrow third channel 2c, there will be no place for the foam to escape. As a result, it is thought that the plastic composition foams upstream and downstream of the plastic composition in search of an escape site, resulting in these corrugated creases at an expansion ratio of 1.5 times or more.

In contrast, Examples 1 to 4 all have a configuration in which the third channel 2c has a cross-sectional area gradually decreasing downstream in the flowing direction of the plastic composition. It is thought that, therefore, the foaming of the plastic composition in the third channel 2c was suppressed and the suitable foam without the corrugated creases at an expansion ratio of at least 1 to 30 times was obtained. In particular, in Example 1, the suitable foam without the corrugated creases at an expansion ratio of at least 1 to 50 times was obtained and the suitable foam with the high expansion ratio without the corrugated creases was obtained.

Above described are just examples, and each of the following aspects has its own specific effects.

### Aspect 1

The mold for extrusion molding, for example, the die 1 includes the extrusion port 3 from which the plastic composition containing at least one kind of plastic is extruded, and the plastic channel 2 in which the supplied plastic composition flows to the extrusion port 3, wherein the plastic channel 2 includes the first channel 2a, the second channel 2b connected to the first channel 2a and having the channel cross-sectional area gradually decreasing downstream in the flowing direction of the plastic composition, and the third channel 2c connected to the second channel 2b and causing the plastic composition to flow to the extrusion port 3, and the third channel 2c has the channel cross-sectional area gradually decreasing downstream in the flowing direction of the plastic composition.

According to this aspect, by forming the third channel so that the channel cross-sectional area gradually decreases downstream in the flowing direction of the plastic composition as described above in the evaluation test, the corrugated creases can be suppressed and foamed plastic with the high expansion ratio can be obtained.

### Aspect 2

In the aspect 1, the channel cross-sectional area of the connection part A between the first channel 2a and the second channel 2b is three times or more as large as the channel cross-sectional area of the connection part B between the second channel 2b and the third channel 2c.

According to this aspect, the pressure loss in the second channel 2b can be increased as explained in the embodiment, and the pressure of the plastic composition at the extrusion port 3 can be reduced to the predetermined pressure. Therefore, foams with the high expansion ratio can be obtained.

### Aspect 3

In the aspect 1 or 2, the mold for extrusion molding includes: the outer die 1a including the through-hole; and the inner die 1b disposed in the through-hole with the gap from the inner peripheral surface 4 of the through-hole, wherein by the inner peripheral surface 4 of the through-hole of the outer die 1a and the outer peripheral surface 5 of the inner die 1b, the plastic channel 2 having an annular cross-sectional shape orthogonal to the extrusion center axis g is formed, the inner peripheral surface forming the second channel 2b, for example the second inner peripheral surface 4b, of the through-hole of the outer die 1a has the shape having an inner diameter gradually decreasing downstream in the flowing direction of the plastic composition, the inner peripheral surface forming the third channel 2c, for example the third inner peripheral surface 4c, of the through-hole of the outer die 1a has the shape having an inner diameter gradually increasing downstream in the flowing direction of the plastic composition, the outer peripheral surface forming the third channel 2c, for example the second outer peripheral surface 5b, of the inner die has the shape having an inner diameter gradually increasing downstream in the flowing direction of the plastic composition, and the gap between the outer peripheral surface of the inner die that forms the third channel 2c and the inner peripheral surface of the through-hole of the outer die 1a that forms the third channel 2c gradually decreases downstream in the flowing direction of the plastic composition.

According to this aspect, as described in the embodiment, the first channel 2a with the annular shape, the second channel 2b with the annular shape having a channel cross-sectional area decreasing downstream in the flowing direction of the plastic composition, and the third channel 2c with the annular shape having a diameter increasing downstream in the flowing direction can be formed. In addition, the third channel 2c has a channel cross-sectional area decreasing downstream in the flowing direction of the plastic composition can be formed.

### Aspect 4

In the aspect 3, the outer peripheral surface forming the first channel 2a and the outer peripheral surface forming the second channel 2b, of the inner die 1b are parallel to the extrusion center axis g.

According to this aspect, as described in the embodiment, the plastic composition flowing inside (closer to the extrusion center axis g) in the first channel 2a keeps flowing in the second channel 2b parallel to the extrusion center axis g without changing the flowing direction. Thus, the disturbance of the flow of the plastic composition in the second channel 2b can be suppressed, and the pressure of the plastic composition in the channel can be controlled suitably.

### Aspect 5

In the aspect 4, the outer peripheral surface forming the first channel 2a and the outer peripheral surface forming the second channel 2b, of the inner die 1b have an outer diameter of 20 mm or less.

According to this aspect, as described in the embodiment, the channel cross-sectional area of the first channel 2a can be increased while suppressing the enlargement of the mold for extrusion molding, such as the die 1, and the pressure loss in the first channel 2a can be suppressed suitably.

### Aspect 6

In any of the aspects 1 to 5, in the cross-section including the extrusion center axis g and parallel to the extrusion center axis g, the angle β between the extruding direction of the plastic composition extruded from the extrusion port, and the extrusion center axis g is 50° or more and 90° or less.

According to this aspect, as described in the embodiment, the disturbance of the flow of the plastic composition in the third channel 2c can be suppressed, and the pressure of the plastic composition at the extrusion port 3 can be reduced to the predetermined pressure. Thus, the generation of corrugated creases can be suppressed and the foamed plastic sheet with the high expansion ratio can be obtained.

### Aspect 7

In any of the aspects 1 to 6, in the cross-section including the extrusion center axis g and parallel to the extrusion center axis g, the angle α between the channel center line h2 of the second channel 2b and the extrusion center axis g is 10° or more and 45° or less.

According to this aspect, as described in the embodiment, the disturbance of the flow of the plastic composition in the third channel 2c can be suppressed, and the pressure of the plastic composition at the extrusion port 3 can be reduced to the predetermined pressure. Thus, the generation of corrugated creases can be suppressed and the foamed plastic sheet with the high expansion ratio can be obtained.

### Aspect 8

In any of the aspects 1 to 7, in the cross-section including the extrusion center axis g and parallel to the extrusion center axis g, the angle γ between the extrusion center axis g and the channel center line h1 of the first channel 2a is -10° or more and 30° or less, where the angle when the upstream side of the channel center line h1 of the first channel 2a in the flowing direction of the plastic composition intersects with the extrusion center axis is negative and the angle when the downstream side of the channel center line h1 of the first channel 2a in the flowing direction of the plastic composition intersects with the extrusion center axis g is positive.

According to this aspect, as described in the embodiment, the plastic composition can flow smoothly from the first channel 2a to the second channel 2b, and the pressure loss at the connection part A between the first channel and the second channel can be suppressed.

### Aspect 9

In any of the aspects 1 to 8, the second channel 2b has a length of 10 mm or more in the direction of the extrusion center axis.

According to this aspect, as described in the embodiment, the disturbance of the flow of the plastic composition in the second channel 2b can be suppressed, and the pressure of the plastic composition in the channel can be controlled suitably.

### Aspect 10

The plastic manufacturing apparatus 20 includes the mold, for example the die 1, to which the plastic composition containing at least one kind of plastic is supplied, the plastic composition being extruded from the extrusion port 3 of the mold so as to manufacture foamed plastic, wherein as the mold, the mold for extrusion molding according to any one of the aspects 1 to 9 is used.

Thus, the expansion ratio at which the corrugated creases are generated can be increased.

### Aspect 11

In the aspect 10, the plastic manufacturing apparatus 20 includes the kneading part, for example the kneading area c, to obtain the plastic composition by kneading at least one kind of plastic at the temperature lower than the melting point of the plastic in presence of compressible fluid.

According to this aspect, as described in the embodiment, the kneading efficiency is increased and the foaming speed in the mold, such as a die, can be made uniform within the plastic composition. Thus, the generation of the partial corrugated creases can be suppressed. Additionally, the occurrence of degradation, carbonization, oxidation, and decomposition of burnt deposits, tar, and the like inside the device can be suppressed.

### Aspect 12

In the aspect 10 or 11, the plastic manufacturing apparatus 20 includes the extrusion molding part, for example the extrusion area d, that extrudes the plastic composition from the mold, for example the die 1, at the temperature lower than the melting point of the plastic such as polylactic acid in presence of the compressible fluid, to mold foamed plastic.

According to this aspect, the viscosity of the plastic composition can be increased compared to the case where the plastic composition is extruded from the mold such as the die 1 at a temperature higher than the melting point of the plastic to form the foamed plastic. Thus, the foamed plastic can be molded by extruding the plastic composition in the high viscosity state, and the suitable foams without any foam breakage can be obtained.

### Aspect 13

In any of the aspects 10 to 12, the plastic composition contains 90 mass% or more of polylactic acid.

According to this aspect, the manufacturing apparatus for the biodegradable foamed plastic compositions can be provided, as described in the embodiment.

### Aspect 14

In the foamed plastic manufacturing method for extruding the plastic composition containing at least one kind of plastic from the extrusion port 3 of the mold, for example the die 1, to manufacture foamed plastic, as the mold, the mold for extrusion molding according to any one of the aspects 1 to 8 is used.

According to this aspect, the foamed plastic with an expansion ratio of 1 or more and 30 times or less with fewer corrugated creases can be manufactured.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

## Claims

1. A mold for extrusion molding comprising:
an extrusion port configured to extrude a plastic composition containing at least one kind of plastic; and
a plastic channel configured to cause the supplied plastic composition to flow to the extrusion port, wherein
the plastic channel includes a first channel, a second channel, and a third channel, the second channel being connected to the first channel and having a channel cross-sectional area gradually decreasing downstream in a flowing direction of the plastic composition, the third channel being connected to the second channel and configured to cause the plastic composition to flow to the extrusion port, and
the third channel has a channel cross-sectional area gradually decreasing downstream in the flowing direction of the plastic composition.

2. The mold for extrusion molding according to claim 1, wherein a channel cross-sectional area of a connection part between the first channel and the second channel is three times or more as large as a channel cross-sectional area of a connection part between the second channel and the third channel.

3. The mold for extrusion molding according to claim 1 or 2, further comprising:
an outer die including a through-hole; and
an inner die disposed in the through-hole with a gap from an inner peripheral surface of the through-hole, wherein
the plastic channel having an annular cross-sectional shape orthogonal to an extrusion center axis is formed by the inner peripheral surface of the through-hole of the outer die and an outer peripheral surface of the inner die,
the inner peripheral surface forming the second channel, of the through-hole of the outer die has a shape having an inner diameter gradually decreasing downstream in the flowing direction of the plastic composition,
the inner peripheral surface forming the third channel, of the through-hole of the outer die has a shape having an inner diameter gradually increasing downstream in the flowing direction of the plastic composition,
the outer peripheral surface forming the third channel, of the inner die has a shape having an inner diameter gradually increasing downstream in the flowing direction of the plastic composition, and
a gap between the outer peripheral surface forming the third channel, of the inner die and the inner peripheral surface forming the third channel, of the through-hole of the outer die gradually decreases downstream in the flowing direction of the plastic composition.

4. The mold for extrusion molding according to claim 3, wherein the outer peripheral surface forming the first channel and the outer peripheral surface forming the second channel, of the inner die are parallel to the extrusion center axis.

5. The mold for extrusion molding according to claim 4, wherein the outer peripheral surface forming the first channel and the outer peripheral surface forming the second channel, of the inner die have an outer diameter of 20 mm or less.

6. The mold for extrusion molding according to any one of claims 1 to 5, wherein in a cross-section including the extrusion center axis and parallel to the extrusion center axis, an angle β between an extruding direction of the plastic composition extruded from the extrusion port, and the extrusion center axis is 50° or more and 90° or less.

7. The mold for extrusion molding according to any one of claims 1 to 6, wherein in the cross-section including the extrusion center axis and parallel to the extrusion center axis, an angle α between a channel center line of the second channel and the extrusion center axis is 10° or more and 45° or less.

8. The mold for extrusion molding according to any one of claims 1 to 7, wherein in the cross-section including the extrusion center axis and parallel to the extrusion center axis, an angle γ between the extrusion center axis and the channel center line of the first channel is -10° or more and 30° or less, where an angle when an upstream side of the channel center line of the first channel in the flowing direction of the plastic composition intersects with the extrusion center axis is negative and an angle when a downstream side of the channel center line of the first channel in the flowing direction of the plastic composition intersects with the extrusion center axis is positive.

9. The mold for extrusion molding according to any one of claims 1 to 8, wherein the second channel has a length of 10 mm or more in a direction of the extrusion center axis.

10. A plastic manufacturing apparatus comprising a mold, the plastic manufacturing apparatus being configured to supply a plastic composition containing at least one kind of plastic to the mold, and extrude the plastic composition from an extrusion port of the mold so as to manufacture foamed plastic, wherein
as the mold, the mold for extrusion molding according to any one of claims 1 to 9 is used.

11. The plastic manufacturing apparatus according to claim 10, further comprising a kneading part configured to knead at least one kind of plastic at a temperature lower than a melting point of the at least one kind of plastic in presence of compressible fluid, to obtain the plastic composition.

12. The plastic manufacturing apparatus according to claim 10 or 11, further comprising an extrusion molding part configured to extrude the plastic composition from the mold at a temperature lower than a melting point of the at least one kind of plastic in presence of the compressible fluid, to mold foamed plastic.

13. The plastic manufacturing apparatus according to any one of claims 10 to 12, wherein the plastic composition contains 90 mass% or more of polylactic acid.

14. A plastic manufacturing method for extruding a plastic composition containing at least one kind of plastic from an extrusion port of a mold, to manufacture foamed plastic, wherein
as the mold, the mold for extrusion molding according to any one of claims 1 to 9 is used.
